**Europäisches Patentamt**

**European Patent Office**

**Office européen des brevets**

(19)

(11) Veröffentlichungsnummer : **0 328 009 B1**

(12) **EUROPÄISCHE PATENTSCHRIFT**

(45) Veröffentlichungstag der Patentschrift :
**19.02.92 Patentblatt 92/08**

(21) Anmeldenummer : **89101972.1**

(22) Anmeldetag : **04.02.89**

(51) Int. Cl.⁵ : **F16C 3/00**

(54) **Gebaute Welle, insbesondere Nockenwelle, Kurbelwelle oder Getriebewelle.**

(30) Priorität : **07.02.88 DE 3803683**

(43) Veröffentlichungstag der Anmeldung :
**16.08.89 Patentblatt 89/33**

(45) Bekanntmachung des Hinweises auf die
Patenterteilung :
**19.02.92 Patentblatt 92/08**

(84) Benannte Vertragsstaaten :
**BE CH DE ES FR GB IT LI NL SE**

(56) Entgegenhaltungen :
**EP-A- 0 328 010**
**DE-A- 3 409 541**
**DE-A- 3 633 435**
**GB-A- 2 050 207**
**GB-A- 2 152 858**
**GB-A- 2 164 420**

(73) Patentinhaber : **Emitec Gesellschaft für**
**Emissionstechnologie mbH**
**Hauptstrasse 150**
**W-5204 Lohmar 1 (DE)**

(72) Erfinder : **Swars, Helmut**
**Riedweg 11**
**W-5060 Bergisch Gladbach 1 (DE)**

(74) Vertreter : **Neumann, Ernst Dieter, Dipl.-Ing. et**
**al**
**HARWARDT NEUMANN PATENTANWÄLTE**
**Scheerengasse 2 Postfach 1455**
**W-5200 Siegburg (DE)**

## Beschreibung

Die Erfindung betrifft eine gebaute Welle, insbesondere Nockenwelle, Kurbelwelle oder Getriebewelle, aus einem Rohrkörper und darauf einzeln aufgeschobenen Antriebselementen, die im wesentlichen kraftschlüssig festgelegt sind.

Wellen der genannten Art sind beispielsweise aus der DE-A- 36 33 435 bekannt. Da diese Wellen bisher verwendete gegossene oder geschmiedete Wellen gleicher äußerer Konfiguration unter Reduzierung des Gewichts und des Massenträgheitsmomentes substituieren sollen, sind die gleichen Anforderungen bezüglich der Belastbarkeit, insbesondere der Biege- und Torsionsfestigkeit an sie zu stellen. Insbesondere bei Steuerwellen, d.h. Nockenwellen zur Gaswechselventilbetätigung oder Nockenwellen in Reiheneinspritzpumpen ist dabei auf hohe Torsionsfestigkeit zu achten, da durch Torsion entstehende Winkelfehler die vorgesehenen Verbrennungsabläufe beeinträchtigen können. Eine einfache Möglichkeit besteht in der Verwendung von Rohrkörpern größerer Wandstärke und/oder Rohrmaterialien höherer Festigkeit. Der erste Weg ist neben der Einbuße an Gewichtsvorteilen durch das notwendige Innenmaß zum Einführen einer Aufweitsonde beschränkt und damit in bestimmten Fällen nicht gangbar, der zweite Weg verbietet sich in der Regel aus Kostengründen, da das Produkt gegenüber konventionellen Wellen nicht verteuert werden darf.

Davon ausgehend ist es Aufgabe der vorliegenden Erfindung gebaute Wellen der eingangs genannten Art bereitzustellen, die eine erhöhte Torsions- und Biegesteifigkeit ohne Gewichtsnachteile haben und auch bei geringen Durchmessern herstellbar sind. Die Lösung hierfür besteht darin, daß jeweils zwischen zwei Antriebselementen eine Hülse mit gegenüber dem Rohrkörper größeren Durchmesser und auf dem Rohrkörper geführten im Durchmesser reduzierten Bundbereichen aufgeschoben ist, wobei die Bundbereiche - vorzugsweise bis zur Hälfte der axialen Länge - unter die Antriebselemente reichen und zwischen Rohrkörper und Antriebselementen im wesentlichen kraftschlüssig eingespannt sind.

Erfindungsgemäß wird hiermit eine Welle dargestellt, die jeweils in den Bereichen zwischen den Antriebselementen zweischalig ausgebildet ist, wobei der innere durchgehende Rohrkörper im Durchmesser durch die Größe der Nocken bestimmt ist und der äußere, aus einzelnen Hülsen bestehende Rohrkörper im Durchmesser deutlich vergrößert sein kann und sogar über die Nockenkontur vorstehen kann, soweit dies die Einbauverhältnisse an der Welle zulassen. Da das polare Wiederstandsmoment eines Rohres und damit die Torsionssteifigkeit mit der vierten Potenz des Durchmessers zunimmt, ist selbst bei Dünnwandigkeit der aufgeschobenen Hülsen ein wesentlich größerer Gewinn möglich, als es eine Wanddickenvergrößerung des inneren Rohrkörpers zulassen würde. Für das Material der Hülsen sind daher neben Stahl auch andere Werkstoffe geeignet, die leichter und/oder kostengünstiger sind, nämlich Aluminium, Titan oder Kohlenfaserverbundwerkstoff, jeweils ausschließlich oder im Verbund miteinander oder im Verbund mit homogenen Kunststoffen.

Der innere durchgehende Rohrkörper kann ebenfalls mit relativ geringer Wandstärke ausgeführt werden und hat dann im wesentlichen nur noch eine Führungs- und Ausrichtfunktion, insbesondere, wenn nochmals verstärkte Stützhülsen innerhalb der Antriebselemente eingesetzt und mit dem Rohrkörper aufgeweitet werden, die eine elastische Vorspannung zur Befestigung der Bundbereiche der Hülsen gegenüber den Antriebselementen vergrößern und überwiegend aufrechterhalten.

Selbstverständlich ist der innere Rohrkörper von Bedeutung für die Torsionsfestigkeit, für die die kritischen Stellen jeweils im Bereich der Einschnürung der Verstärkungshülsen unmittelbar anschließend an ein Antriebselement liegen; eine ausreichende Torsionsfestigkeit stellt sich jedoch in der Regel auch bei dünnwandigen Rohren problemlos ein. Für die kritische Torsionssteifigkeit hingegen ist die Doppelschaligkeit auf den längeren Abschnitten zwischen zwei Antriebselementen entscheidend, die größere Gesamtwinkel der Torsion wirksam verhindert.

Um den inneren Rohrkörper mit geringer Wandstärke ausbilden zu können, zugleich aber eine zur Einspannung der Bundbereiche der Hülsen notwendige elastische Vorspannung aufrechterhalten zu können, sind zwei gleichwertige Lösungen gegeben. Zum einen ist es möglich, in den Rohrkörper jeweils unterhalb der Antriebselemente Stützhülsen von geringfügig größerer Länge als der der Antriebselemente einzusetzen, die dann zusammen mit dem Rohrkörper und den Hülsen gegenüber dem Antriebselement unter plastischer Verformung aufgeweitet werden, wobei Rohrkörper und Bundbereiche der Hülsen einem Einspanneffekt ausgesetzt sind. Nach einer zweiten Möglichkeit sind am Rohrkörper selber unterhalb der Antriebselemente Wandstärkenverdickungen vorgesehen, die ebenfalls geringfügig größere Länge als die Antriebselemente aufweisen und die aus fertigungstechnischen Gründen bevorzugt bei gleichbleibenden Innendurchmesser sich außen am Rohrkörper befinden. Diese Bereich der Wandstärkenverdickung sind dann im Stande, bei einer hydraulischen Aufweitung mit plastischer Verformung die elastische Vorspannung zum Einspannen der Bundbereiche der Hülsen gegenüber den elastisch verformten Antriebselementen zu erzeugen. Aufgrund des größeren radialen Abstandes der beiden Rohrstrukturen ist hierbei eine verbesserte Biegesteifigkeit gegeben, während bei der ersten der genannten Möglichkeiten aufgrund des größeren Durchmessers des inneren Rohrkörpers die Torsionssteifigkeit günstiger ist.

Nach einer besonders günstigen Verfahrensführung wird der innere Rohrkörper beim Festlegen der Antriebselemente, durch Druckbeaufschlagung der Bereiche der Wandstärkenverdickung oder der Stützhülsen verkürzt, wobei die zuvor auf Stoß eingeschobenen angrenzenden Hülsenkörper unter axialen Druck geraten und sich im Bereich des Durchmessersprungs an die Flanken der Antriebselemente anlegen. Dies wird dadurch erreicht, daß der durch Dichtungen vorgegebene Aufweitbereich der Stützkörper oder Wandstärkenverdickungen geringfügig breiter gewählt wird als es der äußeren Abstützung durch das Antriebselement entspricht. Es entstehen hierdurch wulstartige Aufwerfungen zu beiden Seiten eines Antriebselementes, die die angestrebte Verkürzung des Rohrkörpers erzeugen.

Bei nahe aneinanderliegenden benachbarten Antriebskörpern, insbesondere solchen, die paarweise als Nocken mit gleicher Winkellage der Nockenerhebung ausgebildet sind, kann in günstiger Weise eine einstückig mit den Antriebskörpern verbundene Hülse diese zu längeren Doppelantriebselementen verbinden. Hierbei ist der wirksame Durchmesser der Verbindungshülse möglichst groß auszuwählen, insbesondere bis auf den geringsten Durchmesser der Antriebselemente über dem Umfang zu vergrößern. Solche als Doppelnocken ausgeführten verbundenen Antriebselemente können mit Öffnungen an den außenliegenden Stirnseiten der Nockenerhebungen zur Gewichtsreduzierung ausgebildet sein.

In günstiger Weiterbildung können die jeweils zur einen Seite anschließenden Verstärkungshülsen bei Antriebselementen in axialer Endlage mit Bundbereichen ausgebildet sein, die die gesamte Breite des Antriebselementes überdecken.

Werden die genannten miteinander verbundenen Antriebselemente, insbesondere als Doppelnocken, bei dünnwandigem Rohrkörper von einer eingeschobenen Stützhülse gehalten, kann diese in günstiger Weise über die gesamte Länge der benachbarten verbundenen Antriebskörper reichen, wobei jedoch jeweils die Bereiche unterhalb der Antriebskörper abschnittweise aufgeweitet werden.

Eine günstige Ausgestaltung der erfindungsgemäßen Welle geht dahin, die zwischen den zwei Schalen aus Rohrkörper und Hülsenkörpern gebildeten Ringräume zur Schmierölführung zu den Antriebselementen oder zu Lagerstellen zu nutzen. Hierzu ist es erforderlich, eine axiale Verbindung zwischen den einzelnen Räumen herzustellen, die beispielsweise durch Längsschlitze in den Bundbereichen der Hülsenkörper dargestellt werden kann, wenn im Bereich des Durchmessersprunges vom Bundbereich zur äußeren Hülse eine dichtende Anlage an den Flanken der Antriebselemente gegeben ist. Unabhängig von der letztgenannten Bedingung können axiale Durchgangsbohrungen oder außenliegende axiale Nuten in außenliegenden Wandstärkenverdickungen des Rohrkörpers die gleiche Wirkung haben.

Mit der erfindungsgemäßen Welle ist möglich, bei ausreichender Torsionssteifigkeit auch Nockenformen herzustellen, die im Grundkreis eng an den Wellendurchmesser heranreichen und daher nicht als gebaute Nockenwelle in der Bauweise mit durchgehendem einfachen Rohrkörper hergestellt werden können. Die Zusatzhülsen können bei entsprechender Oberflächenbearbeitung ohne weitere Maßnahmen als Lagerstellen für die Wellen dienen, es ist jedoch auch möglich, Lagerstellen durch Lagerringe zu erzeugen, die in völlig übereinstimmender Weise wie die Antriebselemente auf der Welle angeordnet und mit dieser verbunden werden.

Bevorzugte Ausführungsbeispiele der Erfindung sind in der Zeichnung dargestellt und nachfolgend beschrieben.

Fig. 1 zeigt eine erfindungsgemäße Welle als Nockenwelle mit inneren Stützhülsen,

Fig. 2 zeigt eine erfindungsgemäße Welle als Nockenwelle mit Wandstärkenverdickungen des Rohrkörpers.

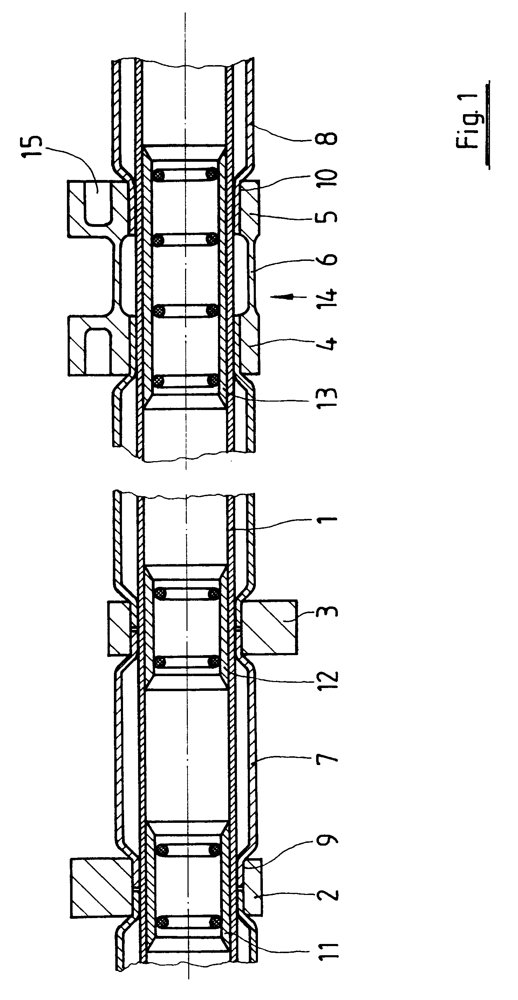

In Fig. 1 ist ein durchgehender Rohrkörper 1 erkennbar, auf dem links zwei einzelne Antriebselemente 2, 3 in Form von gegeneinander versetzten Nocken und rechts ein Antriebselement 14 mit zwei miteinander verbundenen Antriebskörpern 4, 5 in Form von unter gleichem Umfangswinkel ausgerichteten Nocken festgelegt sind, wobei letztere mittels einer Verbindungshülse 6 einstückig miteinander verbunden sind. Jeweils im Anschluß an bzw. zwischen den Antriebselementen, 2, 3, 14 sind Verstärkungshülsen 7, 8 mit gegenüber dem Rohrkörper 1 größeren Durchmesser auf diesen aufgeschoben, wobei im Durchmesser reduzierte Bundbereiche 9, 10 die Führung gegenüber dem Rohrkörper darstellen und in die Durchgangsöffnungen der Antriebselemente 2, 3, 14 eingesteckt sind. Während die Bundbereiche 9 der Verstärkungshülsen 7 zum Einstecken in Antriebselemente 2, 3 in axialer Innenlage etwa die halbe Länge der Antriebselemente haben und sich gegenseitig auf Stoß berühren, haben die Bundbereiche 10 von Verstärkungshülsen 8 zum Einstecken in Doppelantriebselemente 14 nur die Länge der einzelnen Antriebskörper 4, 5. Jeweils unter den Antriebselementen 2, 3, 14 sind in der Darstellung an sich nicht notwendige Stützhülsen 11, 12, 13 vorgesehen, die gemeinsam mit dem Rohrkörper 1 und den Bundbereichen 9, 10 der Verstärkungshülsen 7, 8 hydraulisch aufgeweitet werden und die elastische Vorspannung gegenüber den Antriebselementen 2, 3, 14 halten. Derart eingesteckte Hülsen erlauben eine Reduzierung der Wandstärke des Rohrkörpers 1 und der Hülsen 7, 8, die nach dieser Ausgestaltung nur einen kleinen Teil der Vorspannung erzeugen und kraftschlüssig von innen und außen eingespannt sind.

Das Doppelantriebselement 14 hat zur Gewichtsreduzierung Ausnehmungen 15 an den Stirnseiten der Antriebskörper 4, 5. In das Doppelantriebselement 14, ist eine einzige längere Stützhülse 13 eingeschoben, wobei durch die mit dünnen Linien symbolisch dargestellten Dichtungsringe die Abschnitte bezeichnet sind, die zum Aufweiten mit Druck beaufschlagt sind; im Bereich der Stützhülse 13 sind dies einzelne Längsabschnitte unter den Antriebskörpern 4, 5. Die Hülsen 6 oder 7, 8 können als Lagerstellen bei entsprechender Oberflächenbehandlung dienen, es sind jedoch auch runde Lagerringe in gleicher Weise wie die Antriebselemente 2 und 3 wahlweise auf dem Rohrkörper 1 festzulegen. An die Stelle der in der Darstellung gezeigten Steuernocken können ohne weiteres Zahnräder zur Darstellung von Getriebewellen oder Kurbelwangen zur Darstellung von Kurbelwellen treten.

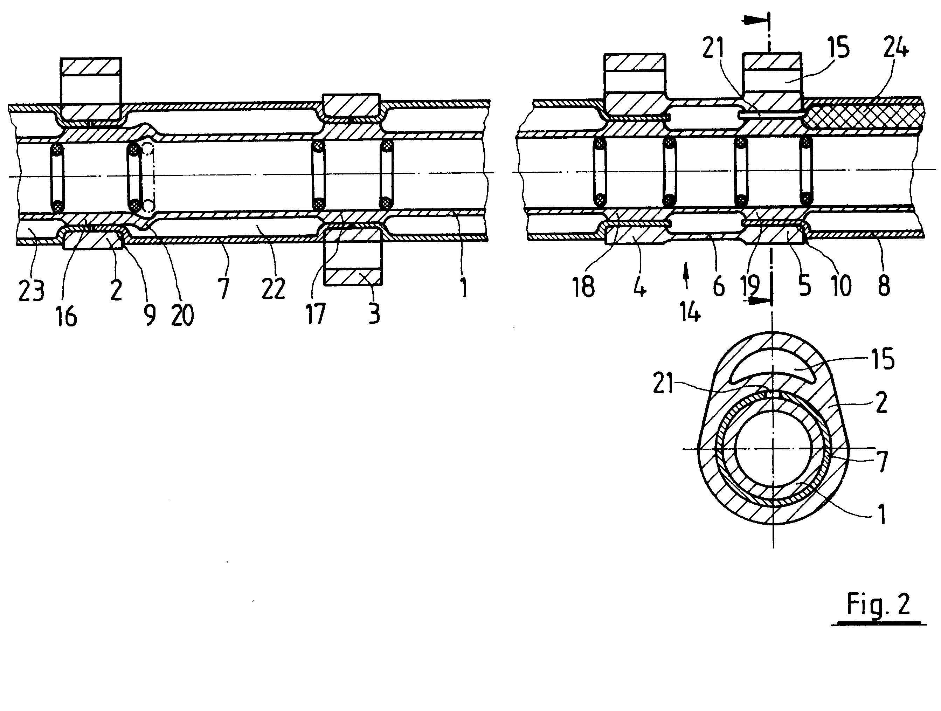

In Fig. 2 ist wiederum ein Rohrkörper 1 erkennbar, der jeweils unterhalb der Antriebselemente 2, 3, 4, 5 Wandstärkenverdickungen 16, 17, 18, 19 aufweist. Die Antriebselemente 4 und 5 sind wiederum zu einem Doppelelement 14 über eine Abstand haltende Hülse 6 verbunden. Bei allen Antriebselementen sind durchgehende Ausnehmungen 15 im Bereich der Nockenerhebung vorgesehen. Auf den Rohrkörper 1 aufgeschobene äußere Hülsenkörper 7, 8 greifen mit Bundbereichen 9, 10 unter die Antriebselemente. Die Bundbereiche 9 sind dabei unter den Antriebselementen 2, 3 auf Stoß gesetzt, während die Bundbereiche 10 der unter den Antriebselementen 4, 5 jeweils die gesamte Breite des Antriebselementes umfassen und frei enden. Wie am Bundbereich 9 durch eine gestrichelte überbreite Dichungsanordnung angedeutet, kann hierbei eine Aufwerfung 20 am Rohrkörper 1 erzeugt werden, die zu einer Verkürzung des Rohrkörpers 1 und zu einem Anlegen der Hülsen im Bereich ihres Durchmessersprunges an die Stirnflächen der Antriebselemente 2, 3 führt. Der hierdurch erzeugte Spannungszustand im Innen- und Außenrohr bewirkt eine erhöhte Festigkeit. Im Schnitt ist das Antriebselement 2 mit der durchgehenden Ausnehmung 15 dargestellt, an dem der Bereich 9 der Hülse 7 sowie der Bereich der Wandstärkenverdickung des Rohrkörpers 1 erkennbar ist. In einer Einzelheit hierzu ist ein Längsschlitz 21 im Bundbereich des Hülsenkörpers 7 erkennbar, über den die Ringräume 22, 23 zwischen Rohrkörper 1 und Hülsenelemten 7 zur Schmierölversorgung miteinander verbunden sind. Ein weiterer Ringraum 24 unter dem Hülsenkörper 8 ist mit Dämpfungsmaterial zumindest über einen Teilumfang ausgefüllt, so daß die vorgenannte Lösung hierdurch nicht ausgeschlossen wird.

Bezugszeichenliste

1 Rohrkörper
2 Antriebselement
3 Antriebselement
4 Antriebselement
5 Antriebselement
6 Hülse
7 Hülse
8 Verstärkungshülse
9 Bundbereich
10 Bundbereich
11 Stützhülse
12 Stützhülse
13 Stützhülse
14 Doppelelement
15 Ausnehmung
16 Wandstärkenverdickung
17 Wandstärkenverdickung
18 Wandstärkenverdickung
19 Wandstärkenverdickung
20 Aufwerfung
21 Längsschlitz
22 Ringraum
23 Ringraum
24 Ringraum

**Patentansprüche**

1. Gebaute Welle, insbesondere Nockenwelle, Kurbelwelle oder Getriebewelle, aus einem Rohrkörper (1) und darauf einzeln aufgeschobenen Antriebselementen (2, 3, 14), die im wesentlichen Kraftschlüssig festgelegt sind,
dadurch gekennzeichnet,
daß jeweils zwischen zwei Antriebselementen (2, 3, 14) eine Hülse (7; 8) mit gegenüber dem Rohrkörper (1) größeren Durchmesser und auf dem Rohrkörper (1) geführten, im Durchmesser reduzierten Bundbereichen (9, 10) aufgeschoben ist, wobei die Bundbereiche unter die Antriebselemente (2, 3, 14) reichen und zwischen Rohrkörper (1) und Antriebselementen im wesentlichen kraftschlüssig eingespannt sind.

2. Welle nach Anspruch 1,
dadurch gekennzeichnet,
daß bei Antriebselementen in axialer Endlage auf dem Rohrkörper (1) und bei Antriebselementen (4, 5) als Teil eines Doppelelementes (14) die Länge des Bundbereichs des anschließenden Hülsenelementes etwa der Länge des Antriebselementes (4, 5) entspricht und diese bis zum Durchmessersprung in das Antriebselement eingesteckt ist.

3. Welle nach Anspruch 1,
dadurch gekennzeichnet,
daß bei Antriebselementen (2, 3) in axialer Innenlage auf dem Rohrkörper (1) die Länge der Bundbereiche (9) der jeweils anschließenden Hülsenelemente (7) jeweils etwa der Hälfte der Länge der Antriebselemente (2, 3) entspricht und diese bis zum Durchmessersprung und dabei zugleich, zumindest nahezu, genau auf Stoß aneinander in die Antriebselemente (2, 3) eingesteckt sind.

4. Welle nach einem der Ansprüche 1 bis 3,
dadurch gekennzeichnet,
daß der Außendurchmesser der Hülsen (7, 8) insbesondere bei unrunden Antriebselementen (2, 3, 4, 5) zumindest teilweise über den Außendurchmesser der Antriebselemente hinausgeht.

5. Welle nach einem der Ansprüche 1 bis 4,
dadurch gekennzeichnet,
daß im Bereich der Antriebselemente (2, 3, 4, 5) zusammen mit dem Rohrkörper (1) aufgeweitete Stützhülsen (11, 12, 13) von zumindest geringfügig größerer Länge als die der Antriebselemente in dem Rohrkörper eingesetzt sind.

6. Welle nach einem der Ansprüche 1 bis 4,
dadurch gekennzeichnet,
daß im Bereich der Antriebselemente (2, 3, 4, 5) innen- oder vorzugsweise außenliegende Wandstärkenverdickungen (16, 17, 18, 19) von zumindest geringfügig grösserer Länge als die der Antriebselemente am Rohrkörper (1) vorgesehen sind.

7. Welle nach einem der Ansprüche 1 bis 5,
dadurch gekennzeichnet,
daß Doppelelemente (14) aus mittels einer mit Abstand zum Rohrkörper (1) liegenden Hülse (6) einstückig miteinander verbundenen Antriebselementen (4, 5) vorgesehen sind.

8. Welle nach einem der Ansprüche 1 bis 7,
dadurch gekennzeichnet,
daß der Rohrkörper (1) und gegebenenfalls die Stützhülsen (11, 12, 13) aus Stahl gefertigt sind.

9. Welle nach einem der Ansprüche 1 bis 8,
dadurch gekennzeichnet,
daß die Antriebselemente (2, 3, 14), insbesondere als Steuernocken aus Gußwerkstoff bestehen.

10. Welle nach einem der Ansprüche 1 bis 9,
dadurch gekennzeichnet,
daß die Zwischenhülsen (7, 8) aus Stahl, Aluminium, Titan oder Kohlenfaserverbundwerkstoff, jeweils ausschließlich oder im Verbund miteinander oder im Verbund mit Kunststoff bestehen.

11. Welle nach einem der Ansprüche 1 bis 10,
dadurch gekennzeichnet,
daß die Zwischenhülsen (7, 8) unterhalb der Antriebselemente (2, 3, 4, 5) bei abdichtender Anlage des Wandbereiches am Durchmessersprung an den Flanken der Antriebselemente Längsschlitze (21) zur Verbindung der einzelnen Ringräume zwischen Rohrkörper (1) und Zwischenhülsen (7, 8) untereinander als Schmierölführung aufweisen.

12. Welle nach einem der Ansprüche 1 bis 10,
dadurch gekennzeichnet,

5

daß der Rohrkörper (1) im Bereich außenliegender Wandstärkenverdickungen (16, 17, 18, 19) unterhalb der Antriebselemente (2, 3, 4, 5) axiale Durchgangsbohrungen oder axiale Außennuten, zur Verbindung der einzelnen Ringräume zwischen Rohrkörper (1) und Zwischenhülsen (7, 8) untereinander als Schmierölführung aufweisen.

13. Verfahren zur Herstellung einer Welle nach einem der Ansprüche 1 bis 12,
dadurch gekennzeichnet,
daß die Abschnitte des Rohrkörpers (1) innerhalb der Antriebselemente (2, 3, 4, 5), zusammen mit den eingeschobenen Bundbereichen (9, 10) der Hülsenelemente (7, 8) und den Antriebselementen (2, 3, 4, 5) jeweils gemeinsam umgeformt werden, wobei die Bundbereiche (9, 10) zwischen Rohrkörper (1) und Antriebselementen (2, 3, 4, 5) im wesentlichen kraftschlüssig eingespannt werden.

14. Verfahren zur Herstellung einer Welle nach einem der Ansprüche 1 bis 12,
dadurch gekennzeichnet,
daß die Stützhülse (11, 12, 13) innerhalb eines Antriebselementes (2, 3, 4, 5), der Abschnitt des Rohrkörpers (1) innerhalb des Antriebselementes (2, 3, 4, 5) und der eingesteckte Bundbereich (8, 9) eines Hülsenelementes (7, 8) zusammen mit dem Antriebselement (2, 3, 14) in einem einzigen Aufweitschritt gemeinsam umgeformt werden.

15. Verfahren zur Herstellung einer Welle nach den Ansprüchen 13 oder 14,
dadurch gekennzeichnet,
daß die Bundbereiche (8, 9) der Hülsenelemente (7, 8) vor dem Aufschieben auf den Rohrkörper (1) durch Durchmesserreduzierung, insbesondere mittels Einrollens, eines geraden Rohrabschnittes hergestellt werden.

16. Verfahren zur Herstellung einer Welle nach einem der Ansprüche 10 bis 12,
dadurch gekennzeichnet,
daß durch hydraulische, radiale Druckbeaufschlagung des Rohrkörpers (1), insbesondere der Wandstärkenverdickung (16, 17, 18, 19), oder der Stützhülsen (11, 12, 13) über die axiale Länge der Antriebselemente (2, 3, 4, 5) hinaus, bei zuvor auf Stoß unter die Antriebselemente eingeschobenen Bundbereichen (9, 10) eine radiale Aufwerfung und axiale Verkürzung des Rohrkörpers (1) bewirkt wird, die zu einer mechanischen axialen Druckbeaufschlagung der Hülsenkörper (7, 8) mit einem Anlegen der Wandbereiche am Durchmessersprung an die Flanken der Antriebselemente (2, 3, 4, 5) als Folge führt.

## Claims

1. An assembled shaft, especially a camshaft, crank shaft or drive shaft, comprising a tubular member (1) and a plurality of driving elements (2, 3, 14) slid thereon individually and secured to the tubular member in a substantially force-locking manner,
characterised in that
a sleeve (7, 8) having a diameter greater than that of the tubular member (1) and which includes collar regions (9, 10) of reduced diameter is mounted on the tubular member (1) between a pair of said driving elements (2, 3, 14), the collar regions (9, 10) extending underneath the driving elements (2, 3, 14) and being clamped between the tubular member (1) and the driving elements in a substantially force-locking manner.

2. A shaft according to Claim 1,
characterised in that
in the case of driving elements located at an axially outer end of the tubular member (1), and driving elements (4, 5) comprising part of a double element (14), the length of the collar region of the adjacent sleeve corresponds approximately to the length of the drive elements (4, 5) and is inserted therein to extend to the position of change of diameter of the sleeve.

3. A shaft according to Claim 1,
characterised in that
in the case of driving elements (2, 3) located in an axially inner position on the tubular member (1), the length of the collar regions (9) of the respective adjoining sleeves (7) corresponds approximately to half the length of the respective driving element (2, 3) and that said collar regions (9) are inserted into the driving elements (2, 3) to extend to the position of change of diameter of the sleeve whilst at the same time being at least almost in accurate abutting relationship with one another.

4. A shaft according to any one of Claims 1 to 3,
characterised in that
especially in the case of non-circular driving elements (2, 3, 4, 5), the outer diameter of the sleeves (7, 8) exceeds the outer diameter of the driving elements at least in some areas.

5. A shaft according to any one of Claims 1 to 4,

EP 0 328 009 B1

characterised in that
in the region of the driving elements (2, 3, 4, 5), supporting sleeves (11, 12, 13) expanded together with the tubular member (1) and having a length which is at least slightly greater than that of the driving elements are inserted into the tubular member.

6. A shaft according to any one of Claims 1 to 4
characterised in that
in the region of the driving elements (2, 3, 4, 5), internally or preferably externally positioned thickened wall regions (16, 17, 18, 19) whose length is at least slightly greater than that of the driving elements are provided in the tubular member ( 1).

7. A shaft according to any one of Claims 1 to 5,
characterised in that
there are provided double elements (14) consisting of driving elements (4, 5) integrally connected to one another by a sleeve (6) positioned at a distance from the tubular member (1).

8. A shaft according to any one of Claims 1 to 7
characterised in that
the tubular member (1) and optionally, the supporting sleeves (11, 12, 13) are formed of steel.

9. A shaft according to any one of Claims 1 to 8,
characterised in that
the driving elements (2, 3, 14), especially when comprising control cams, consist of a cast material.

10. A shaft according to any one of Claims 1 to 9,
characterised in that
the intermediate sleeves (7, 8) consist of steel, aluminium, titanium or a carbon fibre composite material, consisting either entirely thereof, or forming composites with each other or composites with plastics.

11. A shaft according to any one of Claims 1 to 10,
characterised in that
the wall region of the sleeve at the position of change of diameter thereof abuts sealingly against the flanks of the driving elements (2, 3, 4, 5) and the intermediate sleeve (7, 8) underneath the said driving elements (2, 3, 4, 5) comprises longitudinal slots (21) interconnecting the individual annular spaces between the tubular member (1) and the intermediate sleeve (7, 8) to form a lubricating oil conduit.

12. A shaft according to any one of Claims 1 to 10,
characterised in that
in the region of externally positioned thickened wall regions (16, 17, 18, 19), underneath the driving elements (2, 3, 4, 5), the tubular member (1) comprises axial through-bores or axial outer grooves for interconnecting the individual annular spaces between the tubular member (1) and the intermediate sleeves (7, 8) to form a lubricating oil conduit.

13. A method of producing a shaft according to any one of Claims 1 to 12,
characterised in that
the portions of the tubular member (1) inside the driving elements (2, 3, 4, 5), together with the inserted collar regions (9, 10) of the sleeve elements (7, 8) and the driving elements (2, 3, 4, 5) are all deformed jointly, the collar regions (9, 10) being clamped in a substantially force-locking manner between the tubular member (1) and the driving elements (2, 3, 4, 5).

14. A method of producing a shaft according to any one of Claims 1 to 12
characterised in that
the supporting sleeve (11, 12, 13) inside the driving element (2, 3, 4, 5), the portion of the tubular member (1) inside the driving element (2, 3, 4, 5) and the inserted collar region (8, 9) of a sleeve element (7, 8) are deformed together with the driving element (2, 3, 14) in one single expanding operation.

15. A method of producing a shaft according to any one of Claims 13 or 14,
characterised in that
the collar regions (8, 9) of the sleeve element (7, 8), prior to being mounted on the tubular member (1), are formed by a reduction of diameter of a straight tubular portion, preferably by a rolling operation.

16. A method of producing a shaft according to any one of Claims 10 to 12,
characterised in that
by applying a hydraulic, radial pressure to the tubular member (1), especially to the thickened wall regions (16, 17, 18, 19) or to the supporting sleeves (11, 12, 13) beyond the axial length of the driving elements (2, 3, 4, 5), the collar regions (9, 10) having previously been inserted underneath the driving elements so as to abut each other, radial expansion and axial shortening of the tubular member (1) is achieved, which axial shortening leads to mechanical axial pressure being applied to the sleeve members (7, 8), with the wall regions at the position of change of diameter abutting against the flanks of the driving elements (2, 3, 4, 5).

7

## Revendications

1. Arbre assemblé, en particulier arbre à cames, vilebrequin ou arbre de transmission, constitué par un corps tubulaire (1) et par des éléments d'entraînement (2, 3, 14) montés séparément sur celui-ci, qui sont fixés essentiellement par assemblage par force,
caractérisé en ce
qu'entre deux éléments d'entraînement (2, 3, 14) est monté à chaque fois un manchon (7 ; 8) présentant un diamètre supérieur au corps tubulaire (1) et des domaines formant collet (9, 10) de diamètre réduit montés sur le corps tubulaire (1), les domaines formant collet pénétrant sous les éléments d'entraînement (2, 3, 14) et étant serrés essentiellement par assemblage par force entre le corps tubulaire (1) et les éléments d'entraînement.

2. Arbre selon la revendication 1,
caractérisé en ce que
pour des éléments d'entraînement en position axiale terminale sur le corps tubulaire (1) et pour des éléments d'entraînement (4, 5) faisant partie d'un élément double (14) le domaine formant collet de l'élément de manchon voisin a une longueur qui correspond sensiblement à la longueur de l'élément d'entraînement (4, 5) et il est inséré dans l'élément d'entraînement jusqu'à la discontinuité de diamètre.

3. Arbre selon la revendication 1,
caractérisé en ce que
pour des éléments d'entraînement (2, 3) en position axiale interne sur le corps tubulaire (1) les domaines formant collet (9) des éléments de manchon (7) voisins ont une longueur qui correspond à chaque fois sensiblement à la moitié de la longueur des éléments d'entraînement (2, 3) et ils sont insérés jusqu'à la discontinuité de diamètre et en même temps au moins approximativement exactement en butée l'un contre l'autre dans les éléments d'entraînement (2, 3).

4. Arbre selon l'une des revendications 1 à 3,
caractérisé en ce que
le diamètre externe des manchons (7, 8) dépasse au moins en partie le diamètre externe des éléments d'entraînement en particulier dans le cas d'éléments d'entraînement (2, 3, 4, 5) non cylindriques.

5. Arbre selon l'une des revendications 1 à 4,
caractérisé en ce que
dans le domaine des éléments d'entraînement (2, 3, 4, 5) sont disposés dans le corps tubulaire des manchons de support (11, 12, 13) élargis en même temps que le corps tubulaire (1) de longueur au moins légèrement supérieure à celle des éléments d'entraînement.

6. Arbre selon l'une des revendications 1 à 4,
caractérisé en ce que,
dans le domaine des éléments d'entraînement (2, 3, 4, 5), il est prévu sur le corps tubulaire (1) des épaississements de paroi (16, 17, 18, 19) situés à l'intérieur ou de préférence à l'extérieur, de longueur au moins légèrement supérieure à celle des éléments d'entraînement.

7. Arbre selon l'une des revendications 1 à 5,
caractérisé en ce
qu'il est prévu des éléments doubles (14) constitués par des éléments d'entraînement (4, 5) reliés d'une pièce entre eux au moyen d'un manchon (6) situé à distance du corps tubulaire (1).

8. Arbre selon l'une des revendications 1 à 7,
caractérisé en ce que
le corps tubulaire (1) et éventuellement les manchons de support (11, 12, 13) sont en acier.

9. Arbre selon l'une des revendications 1 à 8,
caractérisé en ce que
les éléments d'entraînement (2, 3, 14) consistent en particulier en cames radiales en matériau de fonderie.

10. Arbre selon l'une des revendications 1 à 9,
caractérisé en ce que
les manchons intermédiaires (7, 8) consistent en acier, en aluminium, en titane ou en matériau composite à fibres de carbone, exclusivement ou sous forme de composite entre eux ou avec une matière plastique.

11. Arbre selon l'une des revendications 1 à 10,
caractérisé en ce que
les manchons intermédiaires (7, 8) présentent, sous les éléments d'entraînement (2, 3, 4, 5) lors d'un appui étanche du domaine de paroi sur la discontinuité de diamètre au niveau des flancs des éléments d'entraînement, des fentes longitudinales (21) pour relier entre eux les différents espaces annulaires entre le corps tubulaire (1) et les manchons intermédiaires (7, 8) sous forme de conduite d'huile lubrifiante.

12. Arbre selon l'une des revendications 1 à 10,

caractérisé en ce que

le corps tubulaire (1) présente, dans le domaine des épaississements de paroi (16, 17, 18, 19) situés à l'extérieur sous les éléments d'entraînement (2, 3, 4, 5), des alésages de communication axiaux ou des rainures externes axiales pour relier entre eux les différents espaces annulaires entre le corps tubulaire (1) et les manchons intermédiaires (7, 8) sous forme de conduite d'huile lubrifiante.

13. Procédé de fabrication d'un arbre selon l'une des revendications 1 à 12,

caractérisé en ce que

les segments du corps tubulaire (1) à l'intérieur des éléments d'entraînement (2, 3, 4, 5) sont déformés en même temps que les domaines formant collet (9, 10) insérés des éléments de manchons (7, 8) et les éléments d'entraînement (2, 3, 4, 5), les domaines formant collet (9, 10) étant serrés essentiellement par assemblage par force entre le corps tubulaire (1) et les éléments d'entraînement (2, 3, 4, 5).

14. Procédé de fabrication d'un arbre selon l'une des revendications 1 à 12,

caractérisé en ce que

les manchons de support (11, 12, 13) à l'intérieur d'un élément d'entraînement (2, 3, 4, 5), le segment du corps tubulaire (1) à l'intérieur de l'élément d'entraînement (2, 3, 4, 5) et le domaine formant collet (8, 9) inséré d'un élément de manchon (7, 8) sont déformés ensemble en même temps que l'élément d'entraînement (2, 3, 14) dans une seule étape d'élargissement.

15. Procédé de fabrication d'un arbre selon les revendications 13 ou 14,

caractérisé en ce que

les domaines formant collet (8, 9) des éléments de manchon (7, 8) sont fabriqués avant le montage sur le corps tubulaire (1) par réduction de diamètre, en particulier par cintrage d'un segment de tube rectiligne.

16. Procédé de fabrication d'un arbre selon l'une des revendications 10 à 12,

caractérisé en ce que,

par application hydraulique radiale de pression sur le corps tubulaire (1), en particulier sur l'épaississement de paroi (16, 17, 18, 19) ou sur les manchons de support (11, 12, 13) sur la longueur axiale des éléments d'entraînement (2, 3, 4, 5), les domaines formant collet (9, 10) étant montés au préalable en butée sous les éléments d'entraînement, on réalise un évasement radial et un raccourcissement axial du corps tubulaire (1) qui ont pour conséquence une application mécanique axiale de pression sur les corps de manchon (7, 8) avec positionnement des domaines de paroi au niveau de la discontinuité de diamètre contre les flancs des éléments d'entraînement (2, 3, 4, 5).

Fig. 1

EP 0 328 009 B1

EP 0 328 009 B1

Fig. 2

11